Europäisches Patentamt

European Patent Office

Office européen des brevets

(19)

(11) **EP 0 668 517 B1**

(12) # FASCICULE DE BREVET EUROPEEN

(45) Date de publication et mention
de la délivrance du brevet:
**22.10.2003 Bulletin 2003/43**

(51) Int Cl.$^7$: **G02B 6/12**

(21) Numéro de dépôt: **95400088.1**

(22) Date de dépôt: **17.01.1995**

(54) **Procédé de réalisation d'un guide optique et guide optique obtenu par ce procédé**

Verfahren zur Realisierung eines Wellenleiters und durch dieses Verfahren gewonnener Wellenleiter

Procedure of realising an optical guide, and an optical guide obtained by this procedure

(84) Etats contractants désignés:
**DE GB IT**

(30) Priorité: **19.01.1994 FR 9400529**

(43) Date de publication de la demande:
**23.08.1995 Bulletin 1995/34**

(73) Titulaire: **COMMISSARIAT A L'ENERGIE
ATOMIQUE**
**75015 Paris (FR)**

(72) Inventeurs:
 • **Labeye, Pierre**
  **F-38000 Grenoble (FR)**
 • **Ladouceur, François**
  **Deakin, Canberra ACT 2601 (AU)**

(74) Mandataire: **Poulin, Gérard et al**
**BREVALEX**
**3, rue du docteur Lancereaux**
**75008 Paris (FR)**

(56) Documents cités:
 **EP-A- 0 347 233**      **DE-A- 3 804 330**

 • **7TH ECOC, 8 Septembre 1981, COPENHAGEN
  pages 9.3-1 - 9.3-4 E.G.NEUMANN 'DIELECTRIC
  OPTICAL WAVEGUIDE TILTS WITH REDUCED
  LOSSES'**
 • **ELECTRONICS LETTERS, vol.29, no.9, 29 Avril
  1993, ENAGE GB pages 733 - 734 L.LERNER
  'MINIMUM BENDING LOSS INTERCONNECTION
  FOR INTEGRATED OPTICS WAVEGUIDES'**

**Description**

**Domaine technique**

L'invention se rapporte à un procédé d'optimisation d'un trajet d'un guide optique et à un guide optique obtenu par ce procédé.

Par guide optique, on entend dans l'invention toute structure diélectrique comportant un gradient d'indice de réfraction permettant un confinement bidimensionnel de la lumière. Des exemples d'une telle structure sont donnés dans le document FR-2 625 333. On peut citer notamment les structures réalisées :

- par une couche guidante gravée totalement ou partiellement, intercalée entre au moins deux couches d'indices de réfraction inférieurs à celui de la couche guidante,
- ou par une couche guidante non gravée intercalée entre au moins deux couches d'indices de réfraction inférieurs à celui de la couche guidante dont l'une au moins est totalement ou partiellement gravée pour assurer le confinement latéral.

Par optimisation, on entend la minimisation des pertes lors de la propagation de la lumière dans le trajet du guide reliant deux points et impliquant une déviation de la lumière par rapport à un trajet rectiligne.

La lumière peut se propager sans pertes uniquement lorsque le chemin est rectiligne. Dès que la lumière doit changer de direction à l'aide d'un guide optique, il est nécessaire d'introduire une cassure ou un trajet courbe afin de relier les deux directions. Dans le cas de la cassure entre deux chemins rectilignes, les pertes sont proportionnelles à l'angle entre les deux segments de droite, et sont très importantes si l'angle dépasse quelques degrés. Dans le cas d'un trajet courbe, les pertes seront proportionnelles à la courbure (inverse du rayon de courbure) du chemin.

L'art du concepteur de guides optiques et en particulier du concepteur de puces optiques intégrées, consiste à minimiser les pertes dues à ces trajets courbes, tout en conservant un niveau d'intégration maximum.

L'invention trouve une application en optique, par exemple en optique intégrée, et notamment dans le domaine des télécommunications optiques.

**Etat de la technique**

D'un point de vue géométrique, il existe deux types de méthodes pour minimiser les pertes dans un trajet courbe d'un guide optique.

Une première méthode a été très bien décrite dans la thèse du doctorat de E.C.M. Pennings, intitulée "Bends in Optical Ridge Waveguides, Modeling and Experiments", Technische Universiteit, Delft, Pays-bas, 1990.

Elle consiste à utiliser des chemins courbes suivant des arcs de cercles. On obtient alors un chemin à courbure constante par parties, et les pertes par courbures sont ainsi facilement calculables. De plus, en remarquant que le maximum d'intensité lumineuse du mode fondamental du guide courbe est décalé vers le bord extérieur du guide et que sa distribution est légèrement écrasée, on peut à chaque changement abrupt de courbure, décaler les centres des guides de façon à recentrer les modes de propagation, et ainsi diminuer les pertes de transition entre deux discontinuités de courbure.

D'autre part, on sait que les pertes par courbure diminuent lorsque la largeur du guide augmente jusqu'à une certaine valeur limite, à partir de laquelle on atteint un mode de propagation appelé "mode de galerie" ou, en terminologie anglo-saxonne, "whispering gallery mode". On peut donc améliorer les pertes du chemin courbe en élargissant le guide vers cette largeur. Précisons qu'on entend, par l'expression "largeur du guide", la largeur de la partie de la structure guidante qui assure le confinement latéral de la lumière ; par exemple la largeur de la couche gravée (i.e. couche guidante ou couche adjacente) dans les cas décrits précédemment..

On peut donc obtenir, par cette première méthode, un guide avec des parties à courbure et à largeur constante pour chaque partie, avec un décalage entre les centres des deux parties voisines.

Une deuxième méthode consiste à utiliser un trajet à courbure continûment variable et est décrite dans la thèse de doctorat de F. Ladouceur "Buried Channel Waveguides and Devices", Australian National University, Camberra, Australie, 1992. Puisque les changements abrupts de courbure causent des pertes de transition entre les différentes parties du chemin, un trajet à courbure continûment variable devrait avoir une efficacité plus grande en terme de transmission de la puissance lumineuse.

Le trajet du guide est choisi parmi une famille de courbes paramétrées

$$x(t) = \sum_{n=0}^{5} a_n t^n$$

et

$$y(t) = \sum_{n=0}^{5} b_n t^n$$

, $0<t<L$, $n=0$ $n=0$ le choix du trajet se faisant finalement par la minimisation d'une fonctionnelle.

Remarquons que cette méthode ne prévoit aucune modification de la largeur du guide le long du trajet.

L'inconvénient majeur de la première méthode est que la minimisation des pertes est effectuée en introduisant des discontinuités qui engendrent des pertes de transition, et éventuellement des réflexions partielles. Elle est donc intrinsèquement limitée. D'autre part, la réalisation de guides optiques passe généralement par une étape de photolithographie par masquage, et nécessite donc d'avoir décrit correctement la structure sur le masque. Or, la réalisation avec une précision suffisante de ce type de trajet est délicate pour un masqueur, et la méthode est très sensible à toute imperfection de réalisation.

La deuxième méthode a l'élégance d'être souple, très générale, et plus facile à réaliser, mais présente dans son état actuel une efficacité limitée en termes de réduction des pertes optiques.

Par ailleurs, le document BP-0 347 233 divulgue des guides d'ondes courbes aptes à supporter plus d'un mode de propagation à leur fréquence d'utilisation.

Exposé de l'invention

La présente invention a justement pour but de résoudre ces problèmes et a pour objet un procédé d'optimisation du trajet d'un guide optique et un guide optique obtenu par ce procédé.

Plus précisément, elle a pour objet un procédé de réalisation d'un guide optique de largeur nominale $\rho_o$ ayant en tout point une courbure C variable et continue de sorte qu'au moins un bord du guide optique ait une surface possédant ladite courbure C variable et continue, caractérisé en ce qu'il comprend une étape d'optimisation pour limiter les pertes d'énergie lumineuse d'un mode guidé susceptible de se propager dans le guide, l'étape d'optimisation consistant à définir un élargissement $\delta\rho$ du guide comme une fonction variable f de la courbure C, la fonction $\delta\rho=f(C)$ étant une fonction continue.

Un tel procédé peut aisément être mis en oeuvre par les techniques usuelles de photolithographie par masquage.

En outre, il peut s'appliquer à toute structure de guide optique, par exemple les structures $OIS_1$ et $OIS_2$ définis dans le document FR-2 676 808.

Ce procédé est d'autant plus aisé à mettre en oeuvre que l'élargissement peut être réalisé d'un seul côté du guide ou réparti de part et d'autre de celui-ci.

Puisqu'il permet de réduire les pertes de puissance lumineuse à l'intérieur du guide, ce procédé permet également, à un niveau de pertes donné pour un dispositif à intégrer, d'obtenir une meilleure intégration de ce dispositif.

De préférence, la fonction f satisfait à la condition suivante :

$$\lim_{C \to 0} \frac{f(C)}{C} = k$$

où k est une constante.

Plus particulièrement, cette fonction est une fonction linéaire de la courbure : $f(C) = K.C$.

Avec cette fonction, le procédé est de mise en oeuvre particulièrement simple.

Plus particulièrement encore, le coefficient k vérifie l'inégalité $0 \leq k \leq k_{max}$, où $k_{max}$ est la valeur limite au-delà de laquelle un élargissement introduirait des pertes optiques supplémentaires.

L'invention a également pour objet un guide optique obtenu selon le procédé d'optimisation précédent.

Un tel guide est un guide optique de largeur nominale $\rho_o$ ayant en tout point une courbure C variable et continue de sorte qu'au moins un bord du guide optique ait une surface possédant ladite courbure C variable et continue, caractérisé en ce que la largeur du guide présente un élargissement $\delta\rho$ variable de façon continue en fonction de la courbure, selon une fonction δρ=f(C), de façon à limiter les pertes d'énergie lumineuse d'un mode guidé.

Avec cet élargissement variable et continu en fonction de la courbure, les pertes dues à la courbure diminuent. Un mode du guide, décalé et écrasé du fait de la courbure, est approximativement recentré et élargi par rapport aux sections du guide situées "en amont" de la section considérée.

De préférence, cette fonction satisfait à la condition suivante

$$\lim_{C \to 0} \frac{f(C)}{C} = k$$

où k est une constante.

Plus particulièrement, cette fonction est une fonction linéaire de la courbure :f(C)=k.C.

Plus particulièrement encore, le coefficient k vérifie l'inégalité $0 \le k \le k_{max}$, où $k_{max}$ est la valeur limite au-delà de laquelle un élargissement introduirait des pertes optiques supplémentaires.

Brève description des dessins

De toute façon l'invention sera mieux comprise en se référant à la description d'exemples de mise en oeuvre donnés à titre illustratif et non limitatif et qui sera faite en se référant aux figures 1 à 10 suivantes sur lesquelles :

- la figure 1 représente un chemin curviligne orienté dans l'espace,
- les figures 2a et 2b représentent le phénomène de décalage d'un mode de propagation dans un guide courbe,
- la figure 3 (parties a et b) représente le phénomène de réalignement des modes lors de l'élargissement d'un guide,
- la figure 4 représente la structure de la section d'un exemple de guide,
- la figure 5 représente une chicane optique et ses différents paramètres,
- la figure 6 représente une chicane selon l'art antérieur (cas n°I),
- - la figure 7 représente une autre chicane selon l'art antérieur (cas n°II),
- la figure 8 représente une autre chicane selon l'art antérieur (cas n°III),
- la figure 9 représente une autre chicane selon l'art antérieur (cas n°IV),
- la figure 10 représente une chicane avec guide optique selon l'invention,
- la figure 11 représente une vue en perspective d'une chicane réalisée selon l'invention pour une structure particulière de guide.

## Exposé détaillé de l'invention

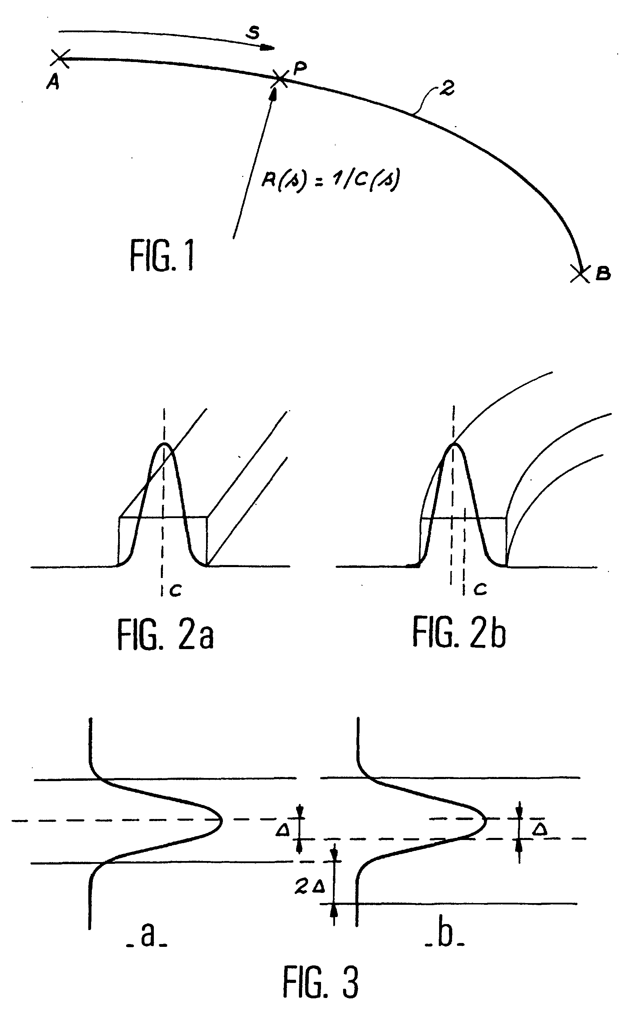

Un guide optique est défini, outre par sa structure interne (nature des couches, dimensionnement des couches, etc...), par sa trajectoire géométrique dans l'espace. Ainsi, et comme illustré sur la figure 1, si on considère un trajet optique 2 allant d'un point A à un point B, tout point P du guide sera défini par une abscisse curviligne s représentant la longueur du chemin parcouru pour aller de A à P. A ce point P correspond également un rayon de courbure locale R(S) associé à une courbure locale C(s)=1/R(s).

Lorsqu'un guide est courbé (C(s)≠0) l'intensité lumineuse d'un mode se propageant dans ce guide s'écrase légèrement vers l'extérieur du guide, c'est-à-dire du côté opposé au centre de courbure par rapport au centre du guide. On entend par centre du guide la position latérale du maximum d'intensité du mode de propagation considéré, dans le guide rectiligne Ainsi, la figure 2a représente la distribution de l'intensité lumineuse dans un guide rectiligne, c'est-à-dire à courbure nulle : le maximum de l'intensité y définit le centre C du guide. La figure 2b représente une portion courbe du même guide, et le maximum de l'intensité est décalé par rapport à C, du côté opposé à la courbure.

Afin de compenser ce décalage des modes transmis par le guide, l'invention propose, dans le cas d'une courbure C(s) continue (calculée par exemple, selon la méthode décrite par Ladouceur dans le document déjà cité), d'élargir le guide, par exemple du côté intérieur au chemin courbe, c'est-à-dire du côté du centre de courbure. Elargir le guide signifie plus exactement élargir la partie du guide assurant le confinement latéral.

Sur les parties a et b de la figure 3, on a représenté l'effet de l'élargissement d'un guide rectiligne sur la répartition de l'intensité d'un mode transmis par ce guide. On voit que l'élargissement 2Δ entraîne un déplacement du maximum de l'intensité par rapport au centre du guide, ce déplacement étant égal à Δ, la moitié de l'élargissement total, et que le maximum d'intensité du guide dans la partie élargie peut coïncider avec le maximum d'intensité dans la partie non élargie.

Dans le cas d'un guide présentant une courbure non nulle, un élargissement du guide (par exemple par rapport à une portion rectiligne qui définit, dans ce cas une largeur nominale $\rho_o$), par exemple du côté intérieur aura pour effet de compenser, au moins partiellement, l'effet de décalage, dû à la courbure, qui a été décrit ci-dessus (figure 2).

Puisque le guide est à courbure continue, un élargissement $\delta\rho$ selon une fonction continue de la courbure a également été choisi.

Un cas particulier est celui où la fonction $\delta\rho=f(C)$ peut s'exprimer, lorsque C est petit devant l'inverse de la largeur du guide, comme une fonction linéaire de la courbure :

$$\delta\rho = f(C) = K \cdot C$$

Ce qui peut encore s'écrire, de façon mathématique :

$$\lim_{C\to 0} \frac{f(C)}{C} = K$$

où K satisfait avantageusement à la double inégalité :

$$0 \le K \le K_{max}$$

où $K_{max}$ est la valeur au-delà de laquelle l'élargissement du guide serait trop important et générerait de nouvelles pertes optiques (ceci signifie que, pour $K_1 > K_{max}$, un élargissement du type $\delta\rho = K_1 C$ réintroduit des pertes). En effet, on sait que le critère pour qu'une variation d'une des grandeurs qui définissent un guide (indice, épaisseur, longueur, etc...) n'induise pas de pertes est que la longueur caractéristique de cette variation soit grande devant la longueur de battement entre deux modes de propagation ("Optical Waveguide Theory", Snyder et al., Chapman & Hall, 1984, chap. 19).

La longueur caractéristique est définie par :

$$L_C = \frac{\rho_0}{2\left(\dfrac{d\rho}{ds}\right)}$$

où $\rho_0$ est une largeur de référence du guide partir de laquelle l'élargissement $\delta\rho$ est défini ; $\rho_0$ correspond à la largeur nominale du guide avant optimisation.

La longueur de battement étant de l'ordre de grandeur de $\frac{\lambda}{n_1 - n_2}$ où $n_1$ et $n_2$ sont respectivement l'indice maximum et l'indice minimum de cette même structure, la condition énoncée ci-dessus s'écrit donc :

$$Lc \gg \frac{\lambda}{n_1 - n_2}$$

puisque $\delta\rho = K \cdot C(s)$ avec $K \le K_{max}$, on obtient en combinant ces deux dernières équations :

$$K_{max} = \frac{\rho_0 (n_1 - n_2)}{2\lambda \int_{s_1}^{s_2} \left(\dfrac{|dC(s)|}{ds}\right) ds}$$

où l'intégrale est définie de $S_1$ à $S_2$, ces deux abscisses curvilignes délimitant la portion du guide sur laquelle on souhaite calculer $K_{max}$.

A titre d'exemple, le paramètre K peut être obtenu en utilisant une approximation gaussienne de la répartition du champ électrique E dans un guide courbe de la forme :

$$E(x) = \left(1 + \varepsilon \frac{x}{R}\right) \exp\left(-\left(\frac{x}{w}\right)^2\right)$$

où x est la coordonnée latérale, R le rayon de courbure, w la demi-largeur (à $\frac{1}{e}$) de l'amplitude du mode de propagation et $\varepsilon$ un paramètre de décentrement qui peut être calculé à l'aide du principe variationnel :

$$\frac{dI}{d\varepsilon} = 0$$

avec la fonctionnelle I donnée (par approximation) par :

$$I = \frac{\int k^2 \left[n^2(x) + 2n_1^2 \frac{x}{R}\right] E^2 - \left(\frac{dE}{dx}\right)^2 dx}{\int E^2 dx} \quad \text{ou} \quad I = \frac{\int k^2 \left[n(x)\left(1 + \frac{x}{R}\right)\right]^2 E^2 - \left(\frac{dE}{dx}\right)^2 dx}{\int E^2 dx}$$

où n est l'indice de la structure guidante. Ce calcul permet d'évaluer $\varepsilon$ en fonction de la longueur d'onde $\lambda$, de la taille w et de l'indice maximal de la structure guidante n1. Il est alors possible de trouver la position du maximum de la répartition par différenciation et l'on obtient :

$$K = \left(\frac{2\pi n_1 w^2}{\lambda}\right)^2$$

Ce coefficient K, et donc l'élargissement sont certes calculés d'une manière approximative, puisque le mode de propagation est non seulement décalé, mais aussi déformé dans les sections courbes. Cependant, cet élargissement a l'avantage d'aller dans le bon sens en ce qui concerne les mécanismes de pertes :

- les pertes par courbure diminuent avec l'élargissement du guide,
- le mode décalé est approximativement recentré par rapport à celui de la section précédente,
- le mode est en fait écrasé, donc un élargissement du guide réélargit le mode et compense la déformation par rapport à celui de la section précédente.

Nous avons exposé l'invention en raisonnant sur un élargissement du côté intérieur du guide. Cependant, et si on regarde la description du guide a posteriori, ceci n'est qu'un problème de définition. En effet, le chemin du guide de lumière peut être défini par :

- le centre du guide,
- le bord "intérieur" du guide,
- le bord "extérieur" du guide,
- le bord "droit" du guide,
- le bord "gauche" du guide,
- le chemin du maximum de la répartition d'intensité lumineuse (qui, lui, n'est pas calculable analytiquement mais seulement par approximation).

Devant les ordres de grandeurs des paramètres mis en jeu (élargissement de l'ordre du micron par rapport à un chemin lumineux de plusieurs millimètres, voire plusieurs centimètres), l'élargissement du guide peut être effectué à l'intérieur du guide, à l'extérieur du guide ou réparti des deux côtés.

Un procédé de réalisation d'un tel guide mettra en oeuvre les techniques usuelles de dépôt des couches (couche guidante et couches non guidantes) et de photolithographie par masquage.

Parmi les techniques usuelles de dépôt des couches, on peut citer le dépôt chimique en phase vapeur assisté par plasma, notamment quand il s'agit de couches en silice ($SiO_2$), (technique connue en terminologie anglo-saxonne sous le sigle PECVD), ou d'autres procédés de dépôts chimiques en phase vapeur telle que l'hydrolyse à la flamme et le dépôt chimique en phase vapeur à basse pression, notamment lorsqu'il s'agit de couches de nitrure de silicium

($Si_3N_4$) (technologie désignée en terminologie anglo-saxonne par le sigle LPCVD).

Par ailleurs, lorsque ces couches ont le même constituant de base, par exemple la silice, pour avoir une différence d'indice de réfraction, on effectue un dopage d'une, de plusieurs, ou de toutes ces couches par des méthodes connues parmi lesquelles on peut citer l'utilisation de réactions chimiques en présence de gaz réactifs, l'implantation ionique et la diffusion d'ions ou d'atomes divers.

L'étape de photolithographie par masquage sera précédée d'une étape de définition de l'élargissement $\delta\rho$ du guide comme une fonction f de la courbure C du guide, cette fonction $\delta\rho=f(C)$ étant une fonction continue. De façon avantageuse, cette fonction f peut présenter une des caractéristiques déjà mentionnées ci-dessus pour la définition du guide :

- la fonction satisfait à la condition

$$\lim_{C \to 0} \frac{f(C)}{C} = K$$

- ou, de façon encore plus particulière la fonction a la forme $f(C)=K \cdot C$,
- et/ou, dans l'un ou l'autre cas : $0 \leq K \leq K_{max}$.

A titre illustratif, un exemple est proposé, concernant une chicane optique. Une chicane optique peut être définie comme une portion de guide courbe reliant deux portions de guide droits, parallèles, mais décalés. Les pertes optiques sont calculées par la méthode des faisceaux propagés (plus connu sous le nom de BPM ou "Beam Propagation Method") dont on peut trouver une description dans la thèse de doctorat de F. Ladouceur, précédemment citée.

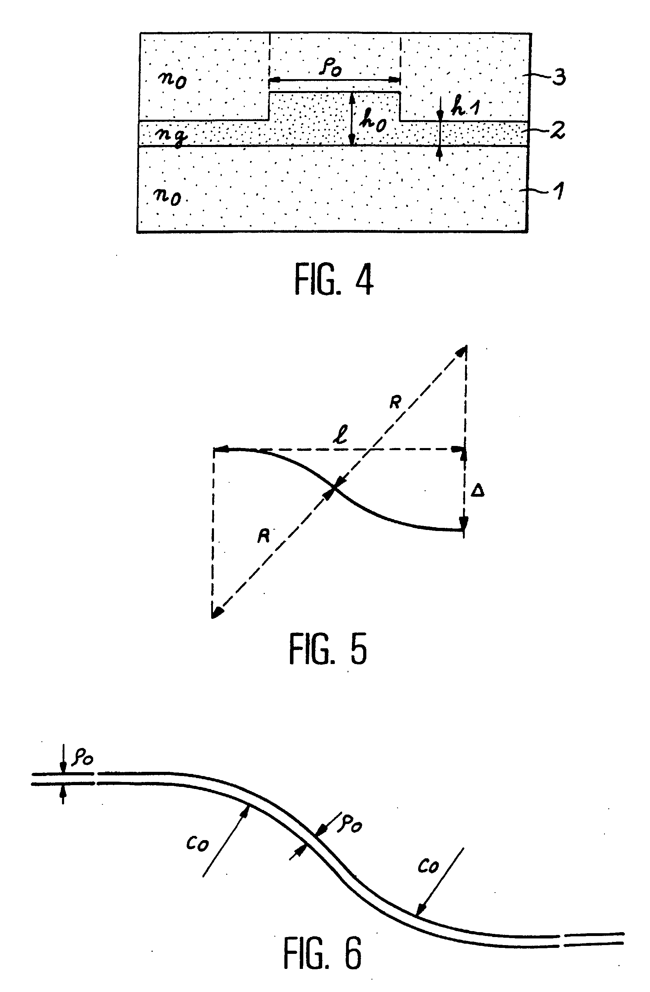

Le type de guide simulé est décrit sur la figure 4 et correspond à la structure décrite dans le brevet FR-B-2 625 333. Ce guide comprend :

- une première couche 1 de silice dopée au phosphore à 3%, d'indice $n_o=1,46$,
- une deuxième couche 2 de silice dopée au phosphore à 6% et d'indice $n_g=1,47$ ; cette deuxième couche est gravée, présente une épaisseur centrale $h_o=4,5$ μm sur une largeur $\rho_o=6,5$ μm, pour une épaisseur latérale $h_1=2$ μm ; c'est cette couche qui assure le confinement latéral de la lumière dans le guide.
- une troisième couche 3 de composition et d'indice identiques à la première.

La géométrie de la chicane est définie sur la figure 5, où les paramètres R, $\Delta$ et $\ell$ ont respectivement les valeurs suivantes :

R = 15 mm,
$\Delta$ = 350 μm,
$\ell$ = 4569,19 μm.

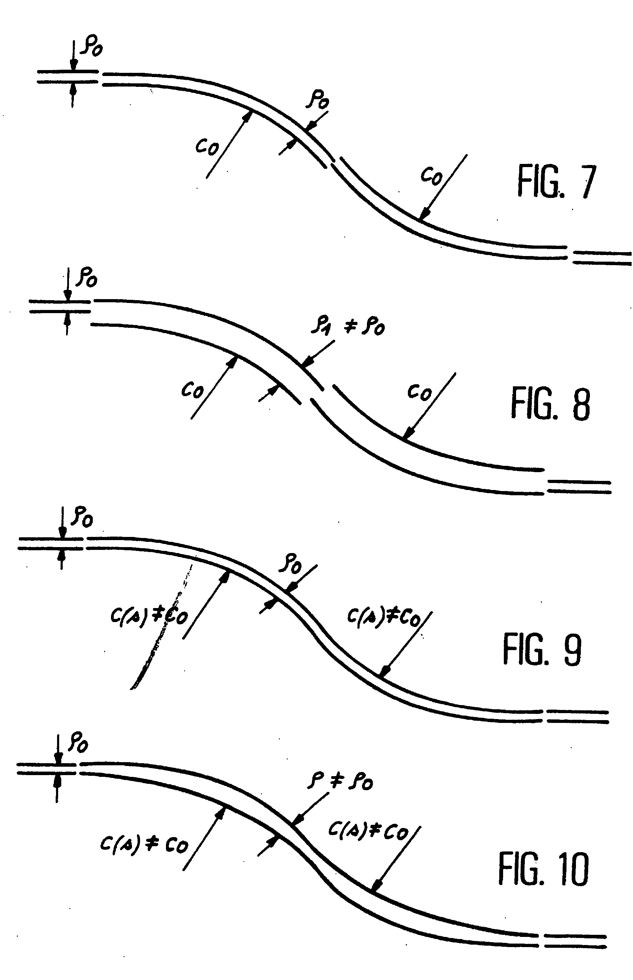

Cinq cas ont été calculés, représentés par les figures 6 à 10, le cas de la figure 10 correspondant à un guide selon l'invention:

CAS n° I (figure 6) :

Chemin du guide inscrit dans des arcs de cercle (courbure $C_o=6,67 \cdot 10^{-5}$ μm$^{-1}$), la largeur $\rho_o$ du guide étant constante,

CAS n°II (figure 7) :

Chemin du guide inscrit dans des arcs de cercle (courbure $C_o=6,67 \cdot 10^{-5}$ μm$^{-1}$), largeur $\rho_o$ du guide constante, décalage des guides de 0,55 μm à chaque changement de courbure,

CAS n°III (figure 8) :

Chemin du guide inscrit dans des arcs de cercle (courbure $C_o=6,67 \cdot 10^{-5}$ μm$^{-1}$), décalage des guides de 0,675 μm à chaque changement de courbure, élargissement du guide dans les portions courbes.

CAS n°IV (figure 9) :

Chemin à courbure variable et continue (C variable entre 0 $\mu m^{-1}$ et $C_{max}$=9,6·$10^{-5}$ $\mu m^{-1}$), largeur de guide constante (ce type de chemin correspond à l'art antérieur décrit par Ladouceur avec des polynômes de degré 5 et un paramètre L=3977),

CAS n°V (figure 10) :

Chemin à courbure variable et continue (C variable entre 0 $\mu m^{-1}$ et $C_{max}$=9,6·$10^{-5}$ $\mu m^{-1}$), et à élargissement continu du guide proportionnel à la courbure (f(C)=k.C, avec k=23807$\mu m^2$<$k_{max}$=5.$10^5$ $\mu m^2$). La largeur nominale $\rho_o$ est la largeur de la portion rectiligne.

Dans ces cinq cas, les pertes de puissance lumineuse exprimées en décibels ont été calculées. Elles sont résumées dans le tableau suivant :

| Cas n° | Pertes (dB) |
|--------|-------------|
| I      | 0,43        |
| II     | 0,15        |
| III    | >0,09       |
| IV     | 0,35        |
| V      | 0,07        |

On voit, d'après les résultats contenus dans ce tableau, l'intérêt que peut présenter un guide optique selon l'invention. En effet, dans le cas de la chicane, par rapport à l'art antérieur le plus performant, l'invention apporte une amélioration d'au moins 22% ($\frac{0,02}{0,09}$) sur le facteur de pertes.

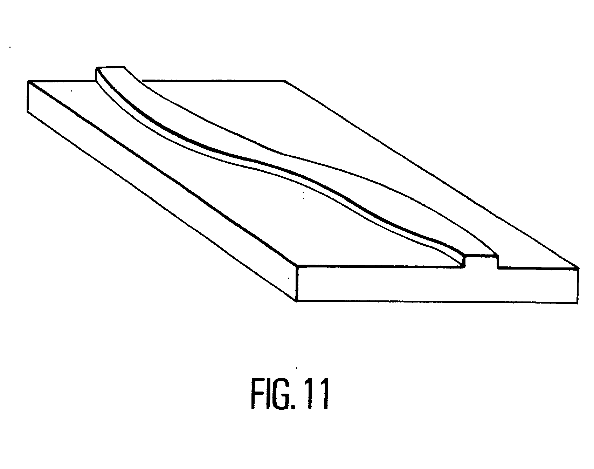

La figure 11 représente une vue en perspective d'une chicane selon l'invention pour une structure particulière de guide. Le chemin peut être celui défini au cas n° V ci-dessus.

De façon plus générale, l'invention n'est pas limitée aux chicanes optiques, mais s'applique à tout type de puce optique intégrée. Par exemple, dans le domaine des télécommunications par fibres optiques, où l'optique intégrée fait peu à peu son apparition (par exemple pour le multiplexage de longueurs d'onde), les pertes optiques de chaque dispositif sont critiques et influent sur le coût de fabrication et d'exploitation d'un tel système. L'invention peut donc s'avérer très utile dans ce domaine.

D'autre part, l'intérêt premier de chaque puce optique intégrée, d'un point de vue industriel, est sa possibilité d'être produite en masse. En effet, les puces sont produites en parallèle sur un même substrat et ensuite découpées. Chaque progrès dans la réduction de la taille de ces puces est donc primordial pour les coûts de production, exactement comme en microélectronique. L'invention permettant une meilleure intégration, à niveau de pertes donné, s'inscrit tout à fait dans cette logique.

## Revendications

1. Procédé de réalisation d'un guide optique de largeur nominale $\rho_o$ ayant en tout point une courbure C variable et continue de sorte qu'au moins un bord du guide optique ait une surface possédant ladite courbure C variable et continue, **caractérisé en ce qu'**il comprend une étape d'optimisation pour limiter les pertes d'énergie lumineuse d'un mode guidé susceptible de se propager dans le guide, l'étape d'optimisation consistant à définir un élargissement $\delta\rho$ du guide comme une fonction variable f de la courbure C, la fonction $\delta\rho$=f(C) étant une fonction continue.

2. Procédé d'optimisation selon la revendication 1, **caractérisé en ce que** la fonction $\delta\rho$=f(C) satisfait à la condition :

$$\lim_{C \to 0} \frac{f(C)}{C} = k$$

où est une constante.

3. Procédé selon la revendication 2, **caractérisé en ce que** la fonction f est une fonction linéaire de la courbure f(C)=k·C.

4. Procédé selon l'une des revendications 2 ou 3, **caractérisé en ce que** le coefficient k vérifie l'inégalité $0 \leq k \leq k_{max}$, où $k_{max}$ est la valeur limite au-delà de laquelle un élargissement introduit des pertes optiques supplémentaires.

5. Guide optique de largeur nominale $\rho_o$ ayant en tout point une courbure C variable et continue de sorte qu'au moins un bord du guide optique ait une surface possédant ladite courbure C variable et continue, **caractérisé en ce que** la largeur du guide présente un élargissement $\delta\rho$ variable de façon continue en fonction de la courbure, selon une fonction $\delta\rho = f(C)$, de façon à limiter les pertes d'énergie lumineuse d'un mode guidé.

6. Guide optique selon la revendication 5, **caractérisé en ce que** la fonction $\delta\rho = f(C)$ satisfait à la condition suivante :

$$\lim_{C \to 0} \frac{f(C)}{C} = k$$

où est une constante.

7. Guide optique selon la revendication 6, **caractérisé en ce que** la fonction f est une fonction linéaire de la courbure $f(C) = k \cdot C$.

8. Guide optique selon l'une des revendications 6 ou 7, **caractérisé en ce que** le coefficient k est tel que $0 \leq k \leq k_{max}$ où $k_{max}$ est la valeur limite au-delà de laquelle un élargissement introduirait des pertes optiques supplémentaires.


**Patentansprüche**

1. Verfahren zu Realisierung eines Wellenleiters der nominalen Breite $\rho_0$, der in jedem Punkt eine variable und kontinuierliche Krümmung C hat, so dass wenigstens ein Rand des Wellenleiters eine Oberfläche bzw. Fläche aufweist, die diese variable und kontinuierliche Krümmung besitzt,
**dadurch gekennzeichnet,**
**dass** es einen Optimierungsschritt umfasst, um die Lichtenergieverluste einer geleiteten, sich in dem Leiter ausbreitenden Mode zu begrenzen, und der Optimierungsschritt darin besteht, eine Verbreiterung $\delta\rho$ des Leiters als eine variable Funktion f der Krümmung C zu definieren, wobei $\delta\rho = f(C)$ eine stetige Funktion ist.

2. Optimierungsverfahren nach Anspruch 1, **dadurch gekennzeichnet, dass** die Funktion $\delta\rho = f(C)$ folgende Bedingung erfüllt:

$$\lim_{C \to 0} \frac{f(C)}{C} = k,$$

wo k eine Konstante ist.

3. Verfahren nach Anspruch 2, **dadurch gekennzeichnet, dass** die Funktion f eine lineare Funktion der Krümmung $f(C) = k \cdot C$ ist.

4. Verfahren nach einem der Ansprüche 2 oder 3, **dadurch gekennzeichnet, dass** der Koeffizient k die Ungleichung $0 \leq k \leq k_{max}$ verifiziert, wo $k_{max}$ der Grenzwert ist, jenseits von dem eine Verbreiterung zusätzliche optische Verluste einführt.

5. Wellenleiter der nominalen Breite $\rho_0$, der in jedem Punkt eine variable und kontinuierliche Krümmung C hat, so dass wenigstens ein Rand des Wellenleiters eine Oberfläche bzw. Fläche aufweist, die diese variable und kontinuierliche Krümmung besitzt,
**dadurch gekennzeichnet,**
**dass** die Breite des Leiters eine variable, in Abhängigkeit von der Krümmung kontinuierliche Verbreiterung $\delta\rho$ aufweist, gemäß einer Funktion $\delta\rho = f(C)$, um die Lichtenergieverluste einer geleiteten Mode zu begrenzen.

**6.** Wellenleiter nach Anspruch 5, **dadurch gekennzeichnet, dass** die Funktion δρ=f(C) die folgende Bedingung erfüllt:

$$\lim_{C \to 0} \frac{f(C)}{C} = k,$$

wo k eine Konstante ist.

**7.** Wellenleiter nach Anspruch 6, **dadurch gekennzeichnet, dass** die Funktion f eine lineare Funktion der Krümmung f(C)=k·C ist.

**8.** Wellenleiter nach einem der Ansprüche 6 oder 7, **dadurch gekennzeichnet, dass** der Koeffizient k so ist, dass $0 \leq k \leq k_{max}$, wo $k_{max}$ der Grenzwert ist, jenseits von dem eine Verbreiterung zusätzliche optische Verluste einführen würde.


**Claims**

**1.** Method for implementing an optical guide of nominal width Po having at any point a variable, continuous curvature C, so that at least one edge of the optical guide has a surface with said variable, continuous curvature C, **characterized in that** it comprises an optimization stage for limiting the light energy losses of a guided mode liable to propagate in the guide, the optimization stage consisting of defining a widening δp of the guide as a variable function f of the curvature C, the function δp = f(C) being a continuous function.

**2.** Optimization method according to claim 1, **characterized in that** the function δp = f(C) satisfies the condition:

$$\lim_{C \to 0} \frac{f(C)}{C} = k$$

where k is a constant.

**3.** Method according to claim 2, **characterized in that** the function f is a linear function of the curvature f(C) = k.C.

**4.** Method according to claim 2 or 3, **characterized in that** the coefficient k verifies the inequality $0 \leq k \leq kmax$, where kmax is the limit value beyond which a widening would introduce additional optical losses.

**5.** Optical guide of nominal width Po having at any point a variable and continuous curvature C in such a way that at least one edge of the optical guide has a surface having said variable, continuous curvature C, **characterized in that** the width of the guide has a widening δp variable continuously as a function of the curvature in accordance with a function δp = f(C), so as to limit the light energy losses of a guided mode.

**6.** Optical guide according to claim 5, **characterized in that** the function δp = f(C) satisfies the following condition:

$$\lim_{C \to 0} \frac{f(C)}{C} = k$$

where k is a constant.

**7.** Optical guide according to claim 6, **characterized in that** the function f is a linear function of the curvature f(C) = k.C.

**8.** Optical guide according to claim 6 or 7, **characterized in that** the coefficient k is such that $0 \leq k \leq kmax$, where kmax is the limit value beyond which a widening would introduce additional optical losses.

FIG. 1

$R(A) = 1/C(A)$

FIG. 2a

FIG. 2b

FIG. 3

FIG. 4

FIG. 5

FIG. 6

FIG. 7

FIG. 8

FIG. 9

FIG. 10

FIG. 11